Europäisches Patentamt

European Patent Office

Office européen des brevets

(19)

(11) Publication number: **0 050 423**
A1

## (12) EUROPEAN PATENT APPLICATION

(21) Application number: **81304388.2**

(22) Date of filing: **23.09.81**

(51) Int. Cl.³: **G 07 F 13/10**, G 01 F 13/00,
A 47 J 31/40

(30) Priority: **15.10.80 GB 8033261**

(43) Date of publication of application: **28.04.82**
**Bulletin 82/17**

(84) Designated Contracting States: **AT BE CH DE FR GB IT
LI LU NL SE**

(71) Applicant: **Evans, Barrie, trading as BARRIE EVANS
DEVELOPMENTS Dunston Trading Estate Foxwood
Road, Sheepbridge Chesterfield Derbyshire (GB)**

(72) Inventor: **Bellamy, Alan, 2 School Hill Cutthorpe,
Chesterfield Derbyshire (GB)**

(74) Representative: **Paget, Hugh Charles Edward et al,
MEWBURN ELLIS & CO. 2/3 Cursitor Street, London
EC4A 1BQ (GB)**

(54) **Dispense unit for powdered or granular materials.**

(57) A dispense unit for powdered or granular materials and intended primarily for use in a beverage vending machine, the unit including a material container (24) and means such as a screw conveyor (34) for displacing a carefully controlled measure of the material from the material container.

So that the dispensing of the measure of material from the unit is not delayed by the time taken to carefully control the amount of material displaced from the material container (24), the unit includes a holding chamber (26) into which the measure of material is first displaced from the material container (24), the measure of material when dispensed being dumped from the holding chamber (26) under the force of gravity.

"Dispense unit for powdered or granular materials"

The invention relates to a dispense unit for powdered or granular materials, primarily but not exclusively for use in a beverage vending machine, of the kind in which an appropriate quantity of powdered or granular material is mixed with hot or cold water as required.

Previously known dispense units for powdered or granular materials have been of various kinds, for example, of the kind including a screw conveyor for metering a required quantity of the material during a predetermined number of rotations of the screw. Another kind of dispense unit has included a valve element, sometimes constituted by a metallic ball member, for closing an aperture through which the material can fall freely when the valve member has been moved away from its seating. In this case the correct quantity of material has been dispensed by controlling the period of time during which the valve member has been held away from its seat. When a metallic ball member has been used as the valve element, the means employed for moving it away from its seating has sometimes been constituted by an electric solenoid which when activated has moved the ball member against the force of a spring. However, all such previously known dispense units have suffered from the disadvantage that a time delay has occured during the dispensing operation. In a beverage vending machine this is a particularly serious drawback, especially in a case where a disposable cup or the like is required to stop at a number of stations for its measures of required ingredients. For example, if a serving of coffee with milk and sugar is required, the disposable cup will be required to stop three times for the required powdered coffee, powdered milk and sugar before a measure of hot water is added. Consequently, it is essential that the dispensing of each ingredient should take place as quickly as possible. Furthermore, such previously known dispense units have tended to dribble after having been shut off which has caused the selected beverages to be contaminated and has also resulted in the vending machine becoming contaminated and unhygienic by stray ingredients.

The invention as claimed is intended to remedy the above drawbacks. It solves the problem of how to design a dispense unit for powdered or granular materials in which the function of dispensing a measured quantity of material can be carried out in a bare minimum of time.

The advantages offered by the invention are mainly that the functions of measuring the required quantity of the material and of actually dispensing the measured quantity of material are separated so that, when the dispense unit is used in a beverage vending machine the operation of the machine is not delayed by any delay in the measuring of the required quantity of powdered or granular ingredient for the beverage required. On the contrary, the operation of the vending machine can proceed at a rate which is dependent on the time taken to actually dispense the measured quantity or quantities of the material or materials concerned.

In order that the invention may be fully understood and readily carried into effect, the same will now be described, by way of example only, with reference to the accompanying drawings, of which:-

Figure 1 is a perspective view of a beverage vending machine embodying the invention;

Figure 2 is a semi-diagrammatic view which illustrates the construction of the dispense units for the powdered or granular materials used in the machine; and

Figure 3 is a sectional view on the line 3-3 in Figure 2:

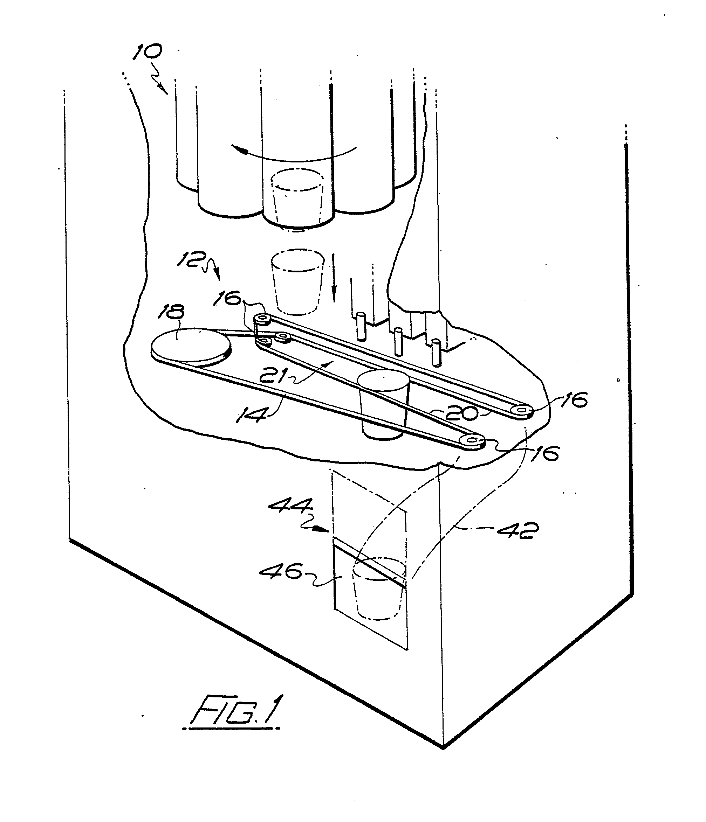

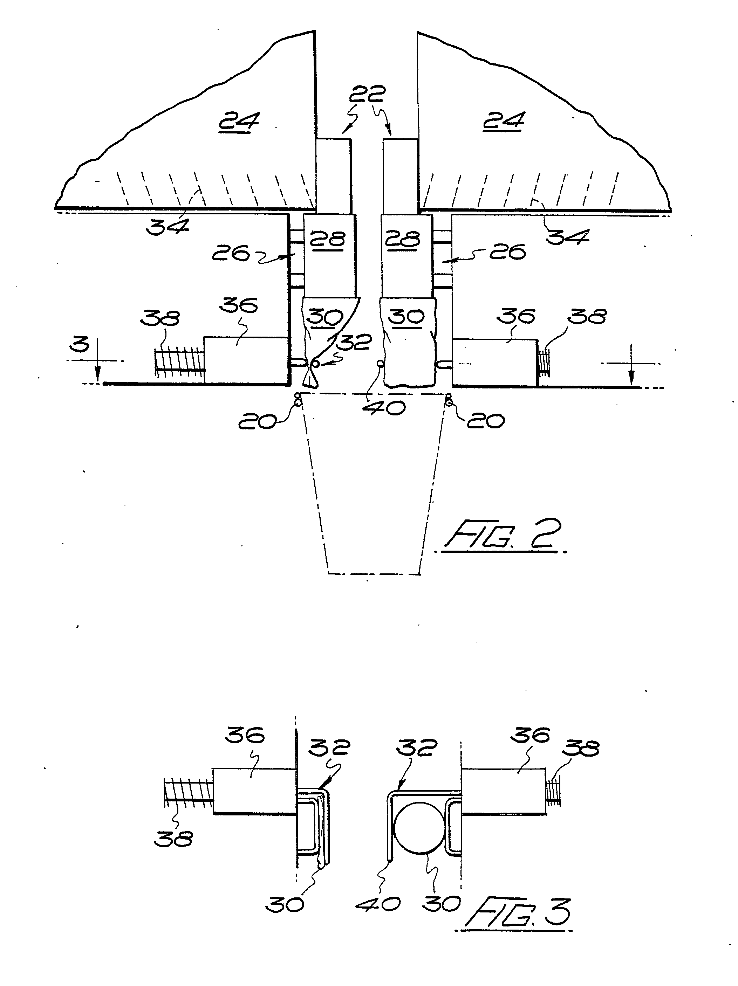

Referring now in particular to Figure 1 of the drawings, the beverage vending machine there illustrated is provided with a magazine of disposable cups, generally indicated 10, and means

0050423

generally indicated 12 for feeding a cup from the magazine 10 in increments of movement through successive loading stations in which the required powdered or granular materials are to be placed in the cup, that is to say materials such as a powdered concentrate of the required beverage and possibly powdered milk and/or sugar. The means for feeding a cup from a magazine of cups in increments of movement through the successive loading stations in turn are here illustrated to be constituted by an endless band or belt 14 which surrounds a plurality of idler rollers 16 and a drive roller 18, the arrangement being such that the endless band or belt has parallel runs 20 moving in one direction and constituting a track 21. When a disposable cup is released from the magazine 10, by means not shown, the cup can fall between said parallel runs of endless band or belt and by virtue of the usual taper of the cup and the appropriate spacing of said runs of band or belt can jam between them as shown in Figure 2 to be carried to the loading stations in turn. On reaching the end of the track, the disposable cup falls down a chute 42 and arrives at a delivery station 44. Means (not shown) are provided at said delivery station for the charging of the cup with hot water (and of course if one of the beverages which can be selected is a cold

- 5 - 0050423

fruit drink, for example, the machine will additionally be provided with means for charging a cup with cold water where appropriate). A sliding window 46 is shown to give access to the delivery station so that when the cup has been charged with water and the pre-selected beverage has been produced the user can raise the window and extract the disposable cup containing his pre-selected beverage.

Referring to Figures 2 and 3, the means for dispensing the required powdered or granular materials into each cup as it passes along the track defined by the parallel runs of endless band or belt 14 are constituted by respective dispense units 22. Each dispense unit includes a material container 24, and a holding chamber generally indicated 26, the holding chamber being constituted by a rigid open bottomed tube 28 and a length of thin walled flexible tubing 30 a lower end of which is usually clamped shut by a clamp 32. Each dispense unit also includes means for displacing a carefully controlled measure of the material from the material container into said holding chamber, these means being shown in figure 2 to be constituted by a screw conveyor 34, and means for opening the underside of said holding chamber when the material is to be dispensed, said means being constituted by means for releasing the clamp 32 so that the measure of material is dumped from the holding chamber.

The means for releasing the clamp 32 so that the measure of the powdered or granular material concerned is dumped from the holding chamber are shown to be constituted by an electric solenoid 36 which when actuated moves against the force of a spring 38 to displace a strong wire element 40 forming one element of a pair of pincer members which form the clamp 32.

Control means (not shown) are provided whereby a user of the vending machine can select a required beverage by pressing an appropriate push button and can also select the addition of a selected additive, such as sugar and/or powdered milk, when required. By the pressing of the appropriate push buttons, the progress along the track 21 of the disposable cup in which the beverage required will be served is pre-programmed. In other words the cup is arranged to stop briefly at each loading station where it is to be charged with a powdered or granular material but carries straight on through those loading stations where the powdered or granular material concerned is not required. Similarly, the operation of the appropriate dispense unit or units is pre-programmed by the pressing of the push buttons so that the measure of the appropriate powdered or granular material is dumped into the disposable cup concerned as it halts briefly beneath the selected dispense unit or units. However, the arrangement is such that in each case, although the dumping of the material concerned must wait until the disposable cup has arrived beneath the appropriate dispense unit, the means for displacing the required measure of material from the material container into the holding chamber concerned can commence as soon as the beverage or additive concerned has been selected by the user. Consequently, at each loading station the disposable cup is arranged to pause for a bare minimum of time, that is to say for only the period required for the material in the holding chamber to be dumped into the cup. The displacing of the required measure of material from the material container into the holding chamber may take a longer period with some materials than with others. For example, cocoa takes a longer period than sugar. Consequently, those materials requiring a relatively longer time to measure out into the holding chambers will be located furthest away from the magazine of disposable cups.

It has been found that the invention described above, that is to say the dispense unit in which the functions of measuring the required quantity of the material concerned and of actually dispensing the measured quantity of material are separated, has resulted in a significant saving of time in the serving of the selected beverages in a vending machine in which dispense units embodying the invention are employed. It has also been found that a dispense unit embodying the invention shuts off cleanly when the measure of material has been dumped. This is in contrast to previously known dispense units which have frequently suffered from the serious drawback that prolonged dribbling of the material after the flow has supposedly been shut off has caused contamination of the selected beverages with unwanted ingredients and has also resulted in the vending machine becoming contaminated and unhygienic by stray ingredients.

Various modifications may be made without departing from the scope of the invention. For example, the means for displacing a carefully controlled measure of the material from the material container into the holding chamber need not be constituted by a screw conveyor. Any other suitable means could be employed (and indeed such means could be different within a single machine to suit the different materials requiring to be dispensed). It will also be understood that the means for releasing the clamp by means of which the lower end of the flexible tubing 30 is normally clamped shut could also be different.

CLAIMS:

1. A dispense unit for a powdered or granular material, the dispense unit including a material container (24) and means for displacing a carefully controlled measure of the material from the material container, characterised in that the dispense unit includes a holding chamber (26) into which the carefully controlled measure of the material is displaced from the material container (24), and includes also means for opening the underside of said holding chamber when the material is to be dispensed so that the measure of material is dumped from said holding chamber (26) under the force of gravity.

2. A dispense unit according to claim 1, further characterised in that the means for displacing a carefully controlled measure of the material from the material container (24) into the holding chamber (26) is constituted by a screw conveyor (34), the volume of the material displaced being controlled by carefully controlling the number of rotations of said screw conveyor.

3. A dispense unit according to either one of the preceding claims, further characterised in that the means for opening the underside of the holding chamber (26) so that the measure of material can fall therefrom under the force of gravity is constituted by means for releasing a clamping

0050423

pressure on a lower end of a flexible tube (30) forming a lower portion of said holding chamber (26).

4.    A dispense unit according to claim 3, further characterised in that the means for releasing a clamping pressure on a lower end of the flexible tube (30) forming a lower portion of the holding chamber (26) are actuated by an electric solenoid (36) which when actuated moves against the action of a spring (38).

5.    A beverage vending machine, characterised in that it has at least one dispense unit (22) for a powdered or granular material according to any one of the preceding claims.

6.    A beverage vending machine according to claim 5, further characterised in that the or each dispense unit is located above a track (21) along which disposable cups are able to travel to a location where they are charged with hot water, control means being provided whereby, at least on those occasions when a measure of the particular powdered or granular material is to be dispensed into the cup concerned, the cup is caused to pause beneath the holding chamber (26) of the dispense unit to enable the measure of the material to be dumped therefrom.

0050423

FIG.1

0050423

2/2

FIG. 2

FIG. 3

0050423

Application number

EP 81 30 4388

# European Patent Office

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>GB - A - 1 079 758</u> (A. BROCK) <br> * Page 2, lines 6-27, 82-92; figures 1,2 * | 1,2 | G 05 F 13/10 <br> 13/00 <br> A 47 J 31/40 |
| X | <u>US - A - 4 191 101</u> (A. OGAWA) <br> * Column 5, line 49 - column 6, line 2; column 7, line 60 - column 9, line 23; figures 1-7 * | 1 | |
| | <u>US - A - 3 224 647</u> (H.W. DIETERT) <br> * Column 3, lines 18-63; figure 1 * | 1,3 | **TECHNICAL FIELDS SEARCHED (Int.Cl. 3)** <br><br> G 07 F 13/06 <br> 13/10 <br> 11/00 <br> 11/28 <br> 13/00 <br> A 41 J 31/40 |
| | <u>US - A - 3 012 701</u> (C.V. WEBER) <br> * Column 3, lines 37-70; figures 1-8 * | 1,3,4 | |
| | <u>GB - A - 2 013 622</u> (J.K. GOSDEN) <br> * Page 1, line 34 - page 2, line 69; figures 1,2 * | 1,5,6 | **CATEGORY OF CITED DOCUMENTS** |
| | <u>DE - A - 2 346 324</u> (A.M. ESSEX) <br> * Page 4, paragraph 8 - page 6, paragraph 1; figure 1 * | 1,5,6 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| | | | &: member of the same patent family, corresponding document |

The present search report has been drawn up for all claims

| Place of search | Date of completion of the search | Examiner |
|---|---|---|
| The Hague | 19-01-1982 | RUDOLPH |

EPO Form 1503.1  06.78